Europäisches Patentamt

European Patent Office

Office européen des brevets

(11) Veröffentlichungsnummer: **0 372 306**

**A1**

## (12) EUROPÄISCHE PATENTANMELDUNG

(21) Anmeldenummer: 89121682.2

(22) Anmeldetag: 23.11.89

(51) Int. Cl.⁵: **F16D 3/72**

(30) Priorität: 02.12.88 DE 3840728

(43) Veröffentlichungstag der Anmeldung:
13.06.90 Patentblatt 90/24

(84) Benannte Vertragsstaaten:
CH DE FR GB LI

(71) Anmelder: VMA-NC MESS- UND
ANTRIEBSTECHNIK GMBH
Goethestrasse 25
D-8752 Mainaschaff(DE)

(72) Erfinder: Hasenstab, Werner
Goethestrasse 38
D-8752 Mainaschaff(DE)

(74) Vertreter: Jaeger, Klaus, Dr. et al
Patentanwälte JAEGER, LORENZ & KÖSTER
Pippinplatz 4a
D-8035 München-Gauting(DE)

(54) **Flexible Kupplung.**

(57) Gegenstand der Erfindung ist eine flexible Kupplung, insbesondere Federscheibenkupplung, die aus einem in etwa zylindrischen Körper 1 besteht, der eine durchgehende koaxiale Längsbohrung 14 und an seinen beiden axialen Enden jeweils einen Endbereich 2,3 aufweist und der zwischen den beiden axialen Endbereichen 2,3 einen flexiblen Bereich 6 besitzt. In die Längsbohrung 14 mindestens eines Endbereichs 2,3 ist eine Nabe 9 zum drehfesten Anschließen einer Welle 18 eingesetzt.

Die erfindungsgemäße Kupplung läßt sich leicht herstellen, da die Längsbohrung 14 auf einfache Weise gebohrt werden kann. Bedingt durch den Einsatz einer Nabe in den Endbereich 2,3 besitzt die Welle 8 einen radialen Abstand zur Innenwandung der Längsbohrung 14 im flexiblen Bereich 6. Diese Welle 8 berührt somit die Innenwandung des flexiblen Bereiches 6 selbst bei einem axialen Versatz des Körpers 1 der erfindungsgemäßen Kupplung nicht.

FIG.1

## Flexible Kupplung

Die Erfindung betrifft eine flexible Kupplung, insbesondere eine Federscheibenkupplung, aus einem in etwa zylindrischen Körper, der eine durchgehende koaxiale Längsbohrung und an seinen beiden axialen Enden jeweils einen Endbereich aufweist und der zwischen den beiden axialen Endbereichen einen flexiblen Bereich besitzt.

Kupplungen dieser Art sind in vielfältigen Ausgestaltungen bekannt.

So ist beispielsweise in der deutschen Auslegeschrift DE-AN S 22850 (ausgelegt am 13. November 1952) eine Wellenkupplung beschrieben, die aus einem Hohlzylinder mit radialen, abwechselnd gegeneinander versetzten Einschnitten besteht.

Aus der US-PS 4 203 305 ist eine weitere flexible Kupplung bekannt, bei der die beiden axialen Endbereiche durch mehrere helixartig gewundene und angeordnete Streifen miteinander verbunden sind.

Bei derartigen Kupplungen ist es wünschenswert, daß die Endbereiche und der dazwischen angeordnete flexible Bereich einstückig ausgebildet sind. Es ist ferner wünschenswert, die durch die Endbereiche und den flexiblen Bereich sich erstreckende Längsbohrung mit dem gleichen Innendurchmesser auszustatten. Dies hat aber zur Folge, daß die in einen Endbereich hineingesteckte Welle nicht über diesen in den flexiblen Bereich hinausragen darf, da bei einem axialen Versatz, den eine solche Kupplung ja gerade ausgleichen soll, das freie Wellenende die Innenwand der Längsbohrung im flexiblen Bereich berühren und bei Drehung natürlich auch beschädigen, wenn nicht sogar zerstören würde.

Um dies zu vermeiden, kann man natürlich die Längsbohrung im flexiblen Bereich mit einem größeren Innendurchmesser ausstatten als in den Endbereichen, so daß die durch einen Endbereich hindurchgesteckte und in den flexiblen Bereich hineinragende Welle einen radialen Abstand von der Innenwand der Längsbohrung im flexiblen Bereich hat.

Eine derartige Kupplung ist jedoch nur schwierig herzustellen, beispielsweise dadurch, daß man erst eine durchgehende Längsbohrung mit gleichbleibendem Innendurchmesser bohrt und dann durch Hinterfräsen den Innendurchmesser im flexiblen Bereich vergrößert.

In letzterem Fall können die miteinander mit Hilfe der Kupplung zu verbindenden Wellen oder Achsen auf übliche Weise in den Endbereichen mit der Kupplung drehfest verbunden werden und über die Endbereiche in den flexiblen Bereich hineinragen. Allerdings können derartige Kupplungen nur auf die geschilderte komplizierte und somit kostenintensive Art und Weise hergestellt werden.

Aufgabe der vorliegenden Erfindung ist es daher, eine einfach und somit kostengünstig herzustellende flexible Kupplung zum Verbinden zweier Wellen bzw. Achsen miteinander bereitzustellen, bei der die Wellen über den Endbereich hinaus in die Kupplung hineinragen können.

Gelöst wird diese Aufgabe durch die Lehre des Anspruchs 1.

Bedingt durch die Tatsache, daß bei der erfindungsgemäßen Kupplung eine Nabe zum drehfesten Anschließen einer Welle in die Längsbohrung mindestens eines Endbereichs eingesetzt ist, kann man den Körper der erfindungsgemäßen Kupplung, welcher beispielsweise ein Hohlzylinder ist oder welcher die in der genannten US-PS 4 203 305 beschriebene Form bzw. den dort beschriebenen Aufbau hat, mit einer sowohl durch die Endbereiche als auch durch den flexiblen Bereich durchgehenden Längsbohrung ausstatten, die in allen Bereichen den gleichen Innendurchmesser hat. In die Längsbohrung eines Endbereichs wird die Nabe eingesetzt, die an sich bekannter und beliebiger Natur sein kann und die drehfest mit dem Körper verbunden ist. Für letzteren Zweck kann man einen Spannsatz, eine formschlüssige Welle-Nabe-Verbindung oder eine Klemmverbindung zur Herstellung einer reibschlüssigen Welle-Nabe-Verbindung zur Anwendung bringen. Es ist aber nicht erforderlich, daß die gesamte Nabe vom Endbereich umspannt wird; die Nabe kann auch axial nach außen vorragen und teilweise vor die Stirnseite des Endbereichs des Körpers vorgesetzt sein.

Wichtig ist vielmehr, daß der wirksame Innendurchmesser der Welle-Nabe-Verbindung und somit auch der Außendurchmesser der einzusetzenden Welle bzw. Achse kleiner ist als der Innendurchmesser der Innenbohrung im flexiblen Bereich, so daß ein radialer Abstand zwischen der Innenwand der Innenbohrung im flexiblen Bereich und der Außenmantelfläche der ggf. in den flexiblen Bereich hineinragenden Welle gegeben ist.

Der Innendurchmesser der Längsbohrung im Endbereich ist dabei zweckmäßigerweise nicht kleiner als der Innendurchmesser der Längsbohrung im flexiblen Bereich, so daß ein Hinterfräsen bei einstückiger Ausführungsform des Körpers der erfindungsgemäßen Kupplung unterbleiben kann. Der Innendurchmesser kann natürlich größer sein als der Innendurchmesser im flexiblen Bereich, da die Herstellung eines derartig ausgestalteten Körpers ohne weiteres durch "Bohren von außen" möglich ist.

Die Verbindung zwischen Welle und Nabe bei der erfindungsgemäßen Kupplung kann beliebiger Natur sein. Es kann sich um reibschlüssige Welle-Nabe-Verbindungen und um formschlüssige Welle-Nabe-Verbindungen handeln; derartige Welle-Nabe-Verbindungen sind beispielsweise beschrieben in "Konstruktionsbücher", Band 32, von Franz G. Kollmann, Springer-Verlag, "Welle-Nabe-Verbindungen".

Auch die Verbindung zwischen der Nabe (es handelt sich dabei genauer gesagt um dasjenige Teil der Welle-Nabe-Verbindung, das radial außen an dieser Verbindung angebracht ist und mit dem Körper im Endbereich in direkten Kontakt kommt) und dem Endbereich des Körpers der erfindungsgemäßen Kupplung kann beliebiger und an sich bekannter Natur sein. Es kann sich beispielsweise um eine formschlüssige Verbindung zwischen Nabe und dem Endbereich handeln. Auch reibschlüssige Verbindungen sind einsetzbar.

Der Hauptvorteil der erfindungsgemäßen Kupplung liegt darin, daß sie einstückig auf einfache Weise gefertigt werden kann. So kann man die durchgehende koaxiale Längsbohrung durch simples Bohren aus einem zylindrischen Vollkörper aus beispielsweise Aluminium oder Stahl "anbringen". Die für die genaue Ausgestaltung des flexiblen Bereichs der erfindungsgemäßen Kupplung erforderlichen Arbeiten kann man entweder vorher oder nachher durchführen.

Man braucht dann nur noch die Naben in die Endbereiche einzusetzen und drehfest damit zu verbinden. Es ist nicht erforderlich, den Innendurchmesser der Längsbohrung im flexiblen Bereich durch Hinterfräsen oder ähnliche komplizierte Arbeitsschritte zu erweitern, um einer in diesen flexiblen Bereich hineinragenden Welle einen ausreichenden radialen Abstand zur Innenwand der Längsbohrung zur Verfügung zu stellen.

Nach einer bevorzugten Ausführungsform handelt es sich bei der erfindungsgemäßen Kupplung um eine Federscheibenkupplung, die weiter unten unter Zuhilfenahme der Figuren näher erläutert ist.

Nach einer weiterhin bevorzugten Ausführungsform ist die erfindungsgemäße Kupplung mit einer reibschlüssigen Klemmverbindung ausgestattet. Vorzugsweise ragt dabei die Nabe mittels eines Stutzens in die Längsbohrung im Endbereich hinein, wobei diejenigen Teile, die zur Erzeugung der Vorspannkraft für die reibschlüssige Verbindung dienen, vor der Stirnseite des Endbereiches angeordnet sind. Bei derartigen Klemmverbindungen wird üblicherweise die Vorspannkraft von außen her erzeugt. Die reibschlüssige Verbindung zur Welle wird mit Hilfe eines zylindrischen, reibschlüssigen Wirkflächenpaars hergestellt. Es kann sich dabei um geteilte und geschlitzte Klemmverbindungen handeln. Bei beiden wird der Reibschluß mittels bei der Montage vorgespannter Schrauben erzeugt.

Die Teile mit dem zylindrischen reibschlüssigen Wirkflächenpaar und den Schrauben können bei dieser bevorzugten Ausführungsform axial vor der Stirnseite des Endbereichs angeordnet sein. Die genannten Schrauben werden zweckmäßigerweise in etwa sekantiell (bezogen auf die kreisförmige Stirnfläche) geführt, so daß sie seitlich vom zylindrischen Körper zugänglich sind.

Nach einer weiterhin bevorzugten Ausführungsform ist die erfindungsgemäße Kupplung mit einem Spannsatz zur Herstellung einer reibschlüssigen Verbindung zwischen Welle und Nabe ausgestattet. Es kann sich dabei um bekannte Spannsätze oder um den in den nachstehenden Figuren näher beschriebenen Spannsatz handeln.

Die Erfindung wird im folgenden anhand der bevorzugte Ausführungsformen darstellenden Figuren näher erläutert.

Von den Figuren zeigen

Fig. 1 eine erfindungsgemäße Kupplung in Form einer Federscheibenkupplung, die mit einer reibschlüssigen Klemmverbindung ausgestattet ist, deren Nabe mittels eines Stutzens in den Endbereich des Körpers der erfindungsgemäßen Kupplung hineinragt; und

Fig. 2 eine der Fig. 1 entsprechende Kupplung, bei der die Klemmverbindung durch einen Spannsatz ersetzt ist.

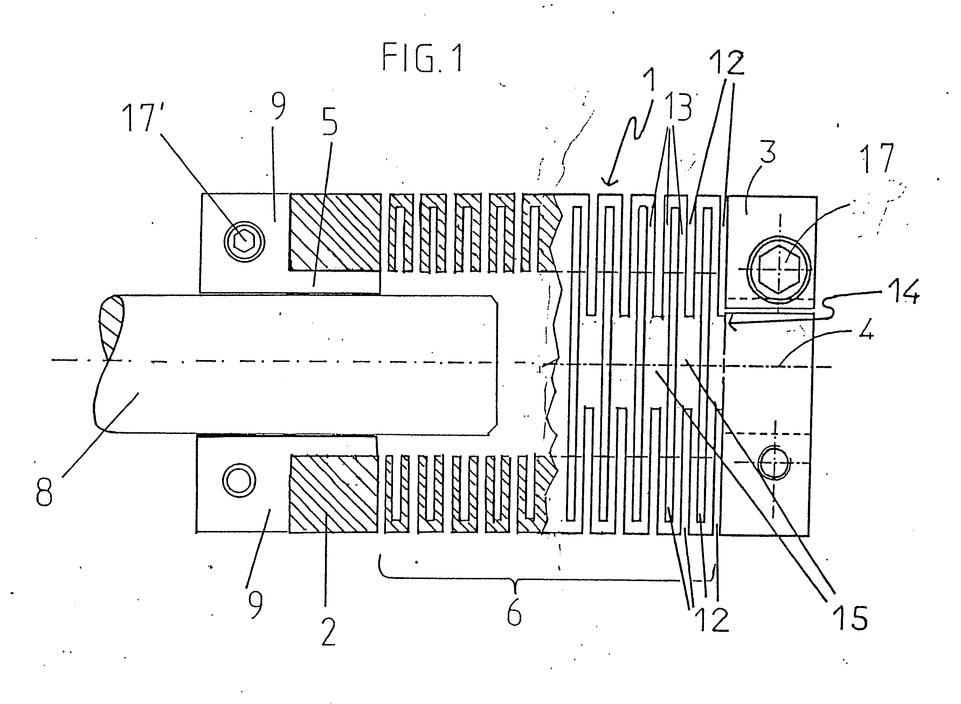

Die Fig. 1 zeigt eine erfindungsgemäße Kupplung, in teilweise geschnittener Darstellung und als Ansicht. Die Kupplung besitzt einen zylindrischen Körper 1, der zwei Endbereiche 2,3 und einen dazwischenliegenden flexiblen Bereich 6 besitzt. Koaxial zur Längsachse 4 verläuft eine Längsbohrung 14.

Der zylindrische Körper besteht aus einem hinreichend festen homogenen Material, beispielsweise Stahl, Aluminium oder auch einem Kunststoff mit hinreichender Festigkeit.

Zwischen den beiden Endbereichen 2,3 sind quer zur Längsachse 4 angeordnete Schlitze 12 angebracht, die sich über die Innenwand der Längsbohrung 14 bis fast zur Längsachse 4 erstrecken. Die Schlitze 12 sind dabei paarweise symmetrisch einander gegenüberliegend angeordnet. Zwischen zwei Schlitzen 12 befinden sich zwei radial verlaufende Stege 15, die sich von der Mantelfläche des zylindrischen Körpers 1 radial nach innen bis zur Längsbohrung 14 erstrecken.

Zwischen zwei axial hintereinanderliegenden Paaren von Schlitzen 12 befindet sich eine Federscheibe 13, die ebenfalls wie die Schlitze 12 quer zur Längsachse 4 angeordnet sind.

In der Querschnittsebene, in der sich zwei Schlitze 12 befinden, befinden sich somit auch zwei Stege 15. Die Querschnittsfläche der Schlitze 12 zusammen mit der Querschnittsfläche der Stege 15 macht die volle Querschnittskreisfläche des zylindrischen Körpers 1 aus.

Die Federscheiben 13 sind auf jeder Seite mittels eines Stegpaares mit den benachbarten Federscheiben 13 bzw. mit einem Endbereich 2,3 verbunden.

Es ist natürlich auch möglich, in einer Querschnittsebene nicht nur zwei Schlitze oder ein Schlitzpaar 12, wie dies in der Fig. 1 gezeigt ist, sondern mehrere Schlitze, beispielsweise drei, anzubringen. Benachbarte Federscheiben 13 sind dann natürlich durch Stege 15 miteinander verbunden, deren Zahl der Anzahl der Schlitze pro Querschnittsebene entspricht.

Die genaue Ausgesaltung und Anordnung der Schlitze 12 und der Federscheiben 13 ist im übrigen auf der linken Hälfte der Fig. 1, welche die erfindungsgemäße Kupplung in Schnittansicht zeigt, nur schematisch und unvollständig wiedergegeben.

Der Endbereich 3 der in der Fig. 1 gezeigten Kupplung stellt eine bekannte und übliche Verbindung zwischen der einzusetzenden Welle und dem Körper 1 der erfindungsgemäßen Kupplung dar. Die Innenbohrung 14 im Endbereich 3 besitzt einen kleineren Innendurchmesser als im flexiblen Bereich 6. Da der Endbereich 3 mit dem flexiblen Bereich 6 einstückig ist, muß der Körper 1 zur Herstellung der Innenbohrung 14 im flexiblen Bereich 6 dort auf geeignete Weise hinterfräst werden.

Der Endbereich 3 besitzt im übrigen einen in der Fig. 1 nicht gezeigten Schlitz bzw. eine entsprechende Einschlitzung, so daß der Endbereich 3 des Körpers 1 eine gewisse radiale Flexibilität erhält, wodurch der Endbereich 3 mit Hilfe der Schrauben 17 radial nach innen gegen die nicht gezeigte Welle verspannt werden kann.

Auf der linken Hälfte der Fig. 1 ist im Teilschnitt gezeigt, wie erfindungsgemäß eine Nabe 9 in den Endbereich 2 eingesetzt ist.

Die Nabe 9 stellt eine zylindrische Scheibe dar, die axial vor die Stirnseite des Endbereiches 2 aufgesetzt ist und mittels eines Stutzens 5 in die Längsbohrung 14 des Körpers 1 eingesetzt ist. Der Innendurchmesser im Endbereich 2 und im flexiblen Bereich 6 des Körpers 1 ist der gleiche.

Die drehfeste Verbindung zwischen der Nabe 9 und dem Endbereich 2 kann beliebiger Natur sein; es kann sich beispielsweise um eine formschlüssige Verbindung handeln. Dies ist in der Fig. 1 nicht näher gezeigt.

Die Nabe 9 besitzt ebenso wie der Endbereich 2 einen Schlitz bzw. eine Einschlitzung (nicht gezeigt) bzw. ist zweigeteilt, so daß durch Anziehen der Schrauben 17´, die sekantiell bezüglich der Querschnittskreisfläche des Körpers 1 verlaufen, eine radiale Vorspannkraft auf die Welle 8 ausgeübt werden kann. Dadurch wird die Welle 8 drehfest mit dem Endbereich 2 und somit dem Körper 1 verbunden.

Wie aus der Fig. 1 ersichtlich, ist der wirksame Innendurchmesser der Nabe 9 geringer als der Innendurchmesser 14. Die über den Endbereich 2 in den flexiblen Bereich 6 des Körpers 1 eingeschobene Welle 8 besitzt somit einen radialen Abstand zur Innenwand der Längsbohrung 14 im flexiblen Bereich 6, so daß die Welle 8 einen axialen Versatz bezüglich der Längsachse 4 haben kann, ohne daß sie mit der Innenwandung des flexiblen Bereichs 6 in Berührung kommt. Die Welle 8 kann sogar bis zur Mitte des Körpers 1 eingeschoben sein. Stattet man die in der Fig. 1 gezeigte Kupplung auch im Endbereich 3 mit einer Nabe 9 aus, dann kann auch die von rechts eingeschobene Welle (bezogen auf die Fig. 1) bis zur Mitte in den flexiblen Bereich hineingeschoben werden, so daß die freien Enden der Wellen 8 einander dicht gegenüberliegen. Eine erfindungsgemäße Kupplung mit zwei Naben 9 könnte daher zwei Wellen 8 miteinander verbinden, deren axiale Enden einander fast berühren.

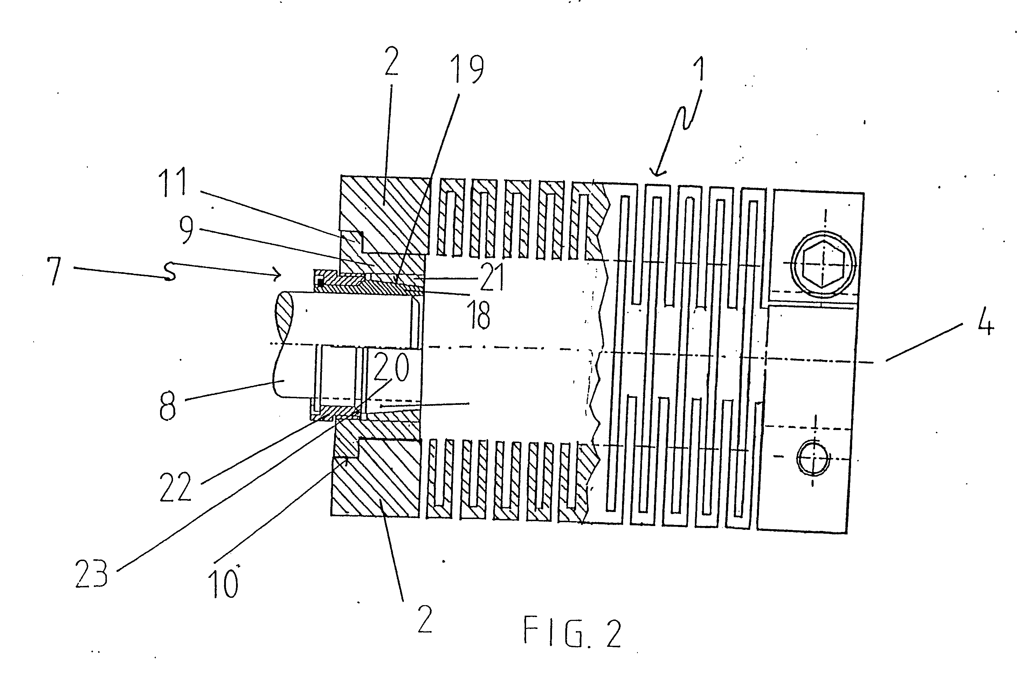

Die in der Fig. 2 gezeigte erfindungsgemäße Kupplung unterscheidet sich von der in der Fig. 1 gezeigten Kupplung lediglich durch die zur Anwendung gebrachte Welle-Nabe-Verbindung auf der linken Hälfte der Figur. In der Fig. 2 sind daher auch nur diejenigen Bezugszeichen wiedergegeben, welche zur Erläuterung dieser Welle-Nabe-Verbindung erforderlich sind.

Die Nabe 9, welche Bestandteil einer Spannvorrichtung (7) ist, stellt einen rotationssymmetrischen Körper dar und besitzt axial außen einen Außenflansch 11, mit dem sie in eine Ringfalznut 10 eingesetzt ist.

Auf die zylindrische Welle 8 ist eine Doppelkonusbuchse 18 aufgesetzt, die eine zentrale axiale zylindrische durchgehende Bohrung besitzt, deren Innendurchmesser geringfügig größer ist als der Außendurchmesser der Welle 8.

Der Außendurchmesser der Doppelkonusbuchse 18 nimmt von dem dem flexiblen Bereich 6 zugewandten Ende aus langsam zu, so daß eine Konusfläche 19 gebildet wird, die radial umläuft. Etwa in der Mitte der Doppelkonusbuchse 18, bezogen auf deren axiale Länge, nimmt der Außendurchmesser der Doppelkonusbuchse 18 zum axial außenliegenden Ende hin ab, und zwar "schneller" als im Bereich der Konusfläche 19. Diese axial außenliegende Konusfläche 20 läuft ebenfalls radial um.

Vom axial außenliegenden "Fuß" der Konusfläche 20 bis zum axial außenliegenden Ende der Doppelkonusbuchse 18 stellt diese eine Buchse mit zylindrischem Außenmantel dar.

Welle 8 und Doppelkonusbuchse 18 sind in eine in der Nabe 9 ausgenommene rotationssymmetrische Bohrung ein gesetzt. Im Bereich der Konusfläche 19 ist die Innenwand der Nabe 9 als Innnenkonus 21 ausgestaltet, der eine Neigung besitzt, die komplementär zur Neigung der Konusfläche 19 ist. Eine Bundschraube 22 ist mittels eines Außengewindes in ein in der Innenwand der Bohrung in der Nabe 9 angebrachtes Innengewinde einschraubbar. Beim Hineinschrauben der Bundschraube 22 in die Nabe 9 kommt die Bundschraube 22 mit ihrer Gegenfläche 23 gegen die Konusfläche 20 in Anlage und drückt die Doppelkonusbuchse 18 axial in die Nabe 3 hinein. Die Gegenfläche 23 ist im übrigen komplementär konisch zur Konusfläche 20. Beim geschilderten Hineinschrauben kommt die Konusfläche 19 gegen den Innenkonus 21 in Anlage und gleitet auf diesem, wobei gleichzeitig die Doppelkonusbuchse 18 mit der Welle 8 verspannt wird. Auf diese Weise wird eine drehfeste Verbindung zwischen der Welle 8 und der Nabe 9 erzielt, welche wiederum drehfest mit dem Endbereich 2 verbunden ist.

Die Konusfläche 20 und die konische Gegenfläche 23 haben zweckmäßigerweise eine Neigung von 45° ± 5°, bezogen auf die Längsachse 4. Die Neigung der Konusfläche 19 und des Innenkonus 21 beträgt zweckmäßigerweise 3°, wobei der Innenkonus zweckmäßigerweise eine geringfügig und insbesondere um 0,5 Min andere Neigung als die Konusfläche 19 bzw. der entsprechende Konus besitzt. Die Innenkonusfläche 21 ist dabei zweckmäßigerweise steiler als die Konusfläche 19.

Die Bundschraube 22 besitzt an ihrem axial äußeren Ende eine ringförmige Falznut 24. In diesem Bereich ist ein Seegerring 25 auf der Doppelkonusbuchse 18 befestigt (er greift beispielsweise in eine radial außen auf der Doppelkonusbuchse 18 umlaufende Nut ein), so daß beim Lösen der Bundschraube 22 die Doppelkonusbuchse 18 mit herausgezogen wird und die Welle 8 freigibt.

## Ansprüche

1. Flexible Kupplung, insbesondere Federscheibenkupplung, aus einem in etwa zylindrischen Körper (1), der eine durchgehende koaxiale Längsbohrung (14) und an seinen beiden axialen Enden jeweils einen Endbereich (2,3) aufweist und der zwischen den beiden axialen Endbereichen (2,3) einen flexiblen Bereich (6) besitzt,
**dadurch gekennzeichnet,**
daß in die Längsbohrung (14) mindestens eines Endbereichs (2,3) eine Nabe (9) zum drehfesten Anschließen einer Welle (8) eingesetzt ist.

2. Flexible Kupplung nach Anspruch 1,
**dadurch gekennzeichnet,**
daß der flexible Bereich (6) quer zur Längsachse (4) des Körpers (1) angeordnete Schlitze (12) aufweist, so daß es sich um eine Federscheibenkupplung handelt.

3. Flexible Kupplung nach Anspruch 1 oder 2,
**dadurch gekennzeichnet,**
daß die Nabe (9) zur Herstellung einer reibschlüssigen Klemmverbindung mit der Welle (8) dient.

4. Flexible Kupplung nach Anspruch 3,
**dadurch gekennzeichnet,**
daß die Nabe (9) mittels eines Stutzens (5) in die Längsbohrung (14) im Endbereich (2,3) hineinragt und daß diejenigen Teile, die zur Erzeugung der Vorspannkraft für die reibschlüssige Verbindung dienen, vor der Stirnseite des Endbereiches (2,3) angeordnet sind.

5. Flexible Kupplung nach Anspruch 1 oder 2,
**gekennzeichnet durch**
eine reibschlüssige Verbindung zwischen Nabe (9) und Welle (8) mittels eines Spannsatzes (7).

6. Flexible Kupplung nach Anspruch 5,
**dadurch gekennzeichnet,**
daß die Längsbohrung (14) axial außen im Endbereich (2,3) zu einer ringförmigen Falznut (10) erweitert ist, in die ein ringförmiger Außenflansch (11) der Nabe (9) eingesetzt ist.

7. Flexible Kupplung nach mindestens einem der vorhergehenden Ansprüche, **gekennzeichnet durch** eine formschlüssige Verbindung zwischen der Nabe (9) und dem Endbereich (2,3) des Körpers (1).

8. Flexible Kupplung nach mindestens einem der vorhergehenden Ansprüche, **dadurch gekennzeichnet,** daß die Nabe (9) in den Endbereich (2,3) des Körpers (1) eingeschrumpft ist.

# FIG.1

EP 0 372 306 A1

FIG. 2

EP 0 372 306 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 150 506 (ALCARO) <br> * Spalte 4, Zeilen 9-43; Fig. 1,3,6,7 * <br> --- | 1,2,4,7 | F 16 D 3/72 |
| X | DE-A-2 422 181 (BOSCH) <br> * Seite 3, Zeile 18 - Seite 4, Zeile 11; Fig. * <br> --- | 1,3,4,8 | |
| X | US-A-3 232 076 (SUNDT) <br> * Spalte 2, Zeile 23 - Spalte 3, Zeile 49; Fig. 1,2 * <br> --- | 1,3,5,8 | |
| X | GB-A-1 177 921 (BARBER) <br> * Seite 1, Zeile 53 - Seite 2, Zeile 124; Fig. 1,2,4 * <br> --- | 1,7 | |
| X | US-A-2 271 567 (OLSON) <br> * Seite 1, rechte Spalte, Zeilen 10-31; Fig. 1-9 * <br> --- | 1,7 | |
| D,A | F. KOLLMANN: "Welle-Nabe-Verbindungen", 1984, Seiten 111-124, Springer-Verlag, Berlin <br> --- | 3,5,7 | |
| D,A | US-A-4 203 305 (WILLIAMS) <br> --- | 3,5,7 | RECHERCHIERTE SACHGEBIETE (Int. Cl.5) <br> F 16 D |
| D,A | DE-B- 22 850 (SIEMENS) <br> ----- | | |

Der vorliegende Recherchenbericht wurde für alle Patentansprüche erstellt

| Recherchenort | Abschlußdatum der Recherche | Prüfer |
|---|---|---|
| DEN HAAG | 09-03-1990 | BARON C. |